# FASCICULE DE BREVET EUROPEEN

(11) **EP 0 614 006 B1**
(45) Date de publication et mention de la délivrance du brevet: **02.05.1997**
(21) Numéro de dépôt: 94400263.3
(22) Date de dépôt: 08.02.1994
(51) Int. Cl.: F02K 9/58, F02K 9/52, F02K 9/44, F02K 9/94

(54) **Système d'injection intermittente des propergols**
Intermittierendes Treibstoff-Einspritzungssystem
Intermitting propergol injection system

(30) Priorité: 26.02.1993 FR 9302263
(43) Date de publication de la demande: 07.09.1994
(73) Titulaire: SOCIETE EUROPEENNE DE PROPULSION, 92150 Suresnes (FR)
(72) Inventeur: Jablonowski, Roger, F-77950 Maincy (FR); Melchior, Antoine, F-77240 Cesson (FR)
(74) Mandataire: Thévenet, Jean-Bruno

(56) Documents cités:
- FR-A- 2 474 101
- GB-A- 2 039 619
- GB-A- 2 081 847
- US-A- 3 097 483
- US-A- 4 707 983

## Description

La présente invention concerne un système d'injection pour principalement mais non exclusivement des ensembles de propulsion à ergols liquides, notamment de pilotage ou de moteur-fusée, muni d'un dispositif d'obturation des circuits d'injection réactivable.

Il est connu par le document de brevet FR-2474101 un dispositif à régénération, équipé de valves, pour moteur-fusée comportant un passage cylindrique fermé à une extrémité et débouchant à l'autre extrémité dans la chambre de combustion du moteur-fusée et à l'intérieur duquel se déplace un piston. Ce piston est percé de canaux pour le passage de propergols entre une chambre d'injection, comprise entre l'extrémité fermée du passage cylindrique et le piston, et la chambre de combustion. Les canaux sont obturés périodiquement par des valves commandées par un gaz de commande sous pression. La différence de poussée permettant le transfert des propergols dans les canaux est créée par le rapport entre la surface du piston exposée à la chambre d'injection et celle tournée vers la chambre de combustion.

Une telle structure est relativement complexe car pour mettre en oeuvre ces valves et obtenir des pressions élevées, Il est nécessaire de minimiser la section de la queue du piston et de réaliser celui-ci avec plusieurs parois distinctes. Il en résulte nécessairement une limitation des performances que vient encore amoindrir la lourdeur d'un tel ensemble de parois. En outre, la présence d'une cavité arrière fermée accroît le risque de combustion non désirée à l'intérieur de celle-ci.

La présente invention se propose de pallier les inconvénients précités et de réaliser un système d'injection comportant notamment un nombre peu élevé de pièces, massives et donc peu fragiles, et dont le dimensionnement soit adapté aux pressions juste nécessaires à son fonctionnement.

Ce but est atteint par un ensemble propulseur destiné à permettre la production de gaz de propulsion à partir d'ergols liquides, comportant un corps à l'intérieur duquel est ménagé un passage cylindrique fermé à une extrémité et débouchant dans une chambre de combustion, et dans lequel se déplace un injecteur, cet injecteur étant percé de canaux d'injection pour amener les ergols liquides à la chambre de combustion, et les canaux pouvant être fermés sélectivement par un obturateur comprenant une partie annulaire faisant saillie vers l'arrière et délimitant deux cavités concentriques, ce système étant caractérisé en ce que l'obturateur est solidaire de moyens de traction dont le déplacement alternatif assure, par un appui frontal de l'obturateur sur l'injecteur annulaire, l'ouverture ou la fermeture simultanée de ces canaux, le déplacement de l'injecteur vers une position de retrait étant réalisé par une butée d'entraînement solidaire des moyens de traction.

Avec une telle architecture qui permet un mouvement relatif entre l'obturateur et l'injecteur, la libération des ergols est réalisée simplement, ce qui confère une très grande fiabilité à ce système.

Selon une réalisation préférentielle, les moyens de traction comprennent un piston double effet se déplaçant entre une première position de poussée de l'obturateur dans laquelle les cavités sont remplies d'ergols et les canaux obturés, et une seconde position de retrait de l'obturateur dans laquelle ces cavités sont alors vides d'ergols.

Cette commande par piston autorise un réglage aisé du système et permet d'assurer des fonctionnements répétitifs très satisfaisants même à des cadences élevées d'alimentation en ergols.

De préférence, les canaux sont organisés en couronne de doublets et d'autres canaux en couronne traversant l'injecteur, sont intercalés entre les doublets afin de permettre un équilibrage des pressions au niveau de la face interne de cet injecteur.

Avantageusement, l'obturateur comporte sur sa face antérieure au moins un épaulement qui, en fin de retrait des moyens de traction, vient pénétrer dans au moins une cavité pratiquée dans l'extrémité fermée du passage cylindrique, réalisant ainsi un amortissement du mouvement de l'obturateur du fait de la perte de charge créée dans cette cavité.

Cette structure spécifique constitue l'équivalent d'un frein hydraulique qui permet un amortissement de la course de l'obturateur sans aucun choc, augmentant d'autant la dynamique d'utilisation du système.

L'extrémité fermée du passage cylindrique est formée par deux manchons concentriques entre lesquels coulisse la partie annulaire arrière de l'obturateur, la surface extérieure du premier manchon coulissant dans le passage et la surface intérieure du second manchon coulissant sur l'axe des moyens de traction.

La cavité annulaire formée entre les deux manchons et dans laquelle coulisse la partie arrière de l'obturateur, communique à l'air libre.

D'autres caractéristiques et avantages de la présente invention ressortiront mieux à la lecture de la description suivante, faite à titre indicatif et non limitatif, en référence aux dessins annexés, sur lesquels:
- La figure 1 montre une coupe longitudinale de l'ensemble d'injection selon l'invention, et
- Les figures 2 à 4 sont des schémas simplifiés montrant les différentes étapes de fonctionnement du dispositif de la figure 1.

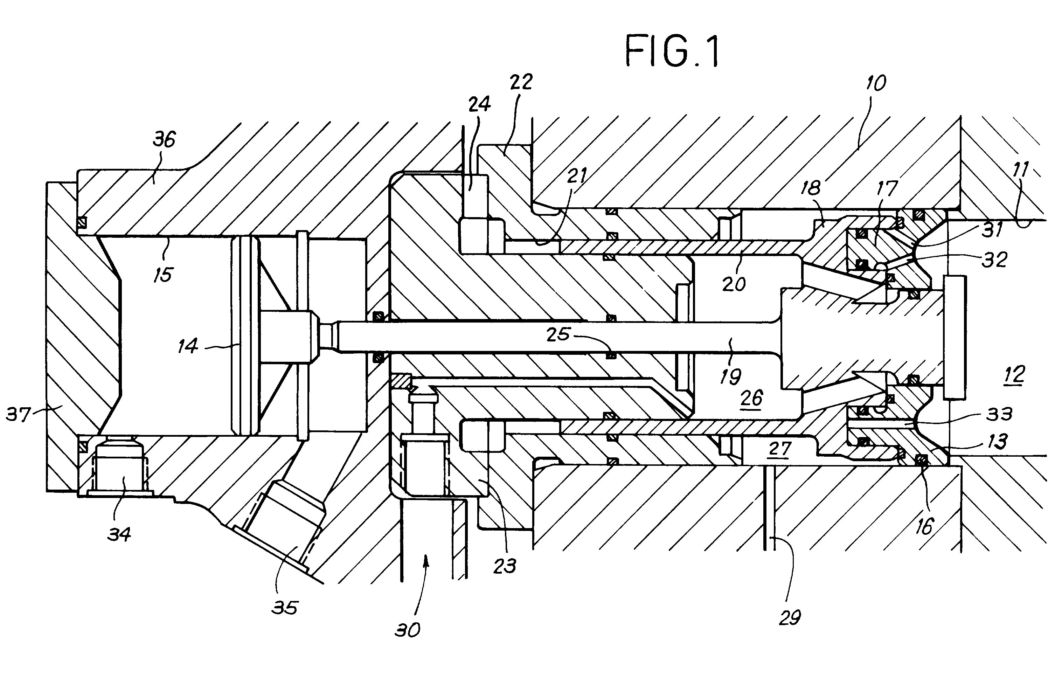

La figure 1 est une coupe longitudinale d'un ensemble d' injection de moteur-fusée comportant un corps principal 10 à l'intérieur duquel est ménagé un passage cylindrique 11 débouchant dans une chambre de combustion 12. Un injecteur annulaire 13 peut se déplacer dans ce passage entre une première et une seconde position définies par le déplacement d'un piston 14 dans une chambre fermée 15, coaxiale au passage 11, et disposée dans son prolongement. Un élément annulaire 16 placé autour de l'injecteur constitue un joint coulissant entre ce dernier et le passage cylindrique. L'injecteur 13 est muni d'une partie arrière annulaire 17 formant saillie et sur laquelle peut s'emboîter un obturateur annulaire 18 solidaire d'une tige 19 du piston 14. Cet obturateur comporte lui-même une partie annulaire cylindrique faisant saillie vers l'arrière 20 et qui coulisse dans une cavité 21 formée entre deux manchons cylindriques 22 et 23, concentriques et disposés l'un dans l'autre à l'intérieur du passage 11. La cavité 21 est mise à l'air libre par une ouverture 24 pratiquée par exemple dans le manchon 23. Le premier manchon 22 extérieur à la partie annulaire 20 coulisse dans le passage 11 alors que le second manchon 23, intérieur à cette partie 20 coulisse sur la tige 19 du piston 14. Des joints annulaires 25 assurent l'étanchéité au niveau respectivement de la cavité 21, du passage 11 et de la tige 19, assurant ainsi une obturation étanche d'une extrémité du passage cylindrique 11, et définissant deux cavités concentriques 26 et 27 distinctes, pour l'injection des propergols.

La tige centrale 19 du piston 14 est munie à son extrémité libre d'une butée d'entraînement 28 destinée à coopérer avec la face extérieure de 1' injecteur 13 formant la paroi d'extrémité de la chambre de combustion.

Les propergols hypergoliques issus de sources séparées, non représentées, sont introduits dans les cavités 27 et 26 par des conduits d'admission 29 et 30 pratiqués respectivement dans le corps 10 et dans le manchon 23, le transfert de ces ergols liquides dans la chambre de combustion 12 s'effectuant par l'intermédiaire de canaux d'injection 31 et 32 percés dans l'injecteur 13 et disposés avantageusement sous la forme d'une couronne de doublets. Afin d'équilibrer les pressions au niveau de l'injecteur, d'autres canaux 33 sont également présents dans cet injecteur et intercalés de préférence entre les doublets d'injection.

Les déplacements du piston 14 et de sa tige 19 sont réalisés sous la poussée d'un gaz de commande issu d'une source non représentée et admis sous pression dans la chambre 15 par l'intermédiaire de conduits 34 et 35 disposés à chaque extrémité de cette chambre .Cette structure à double entrée permet ainsi un déplacement alternatif du piston 14.Il peut être noté que pour faciliter l'assemblage de l'ensemble, le corps 10 est de préférence réalisé en plusieurs parties,la chambre 15 étant avantageusement alésée dans une partie distincte 36 fermée par un élément d'extrémité 37 formant bouchon.

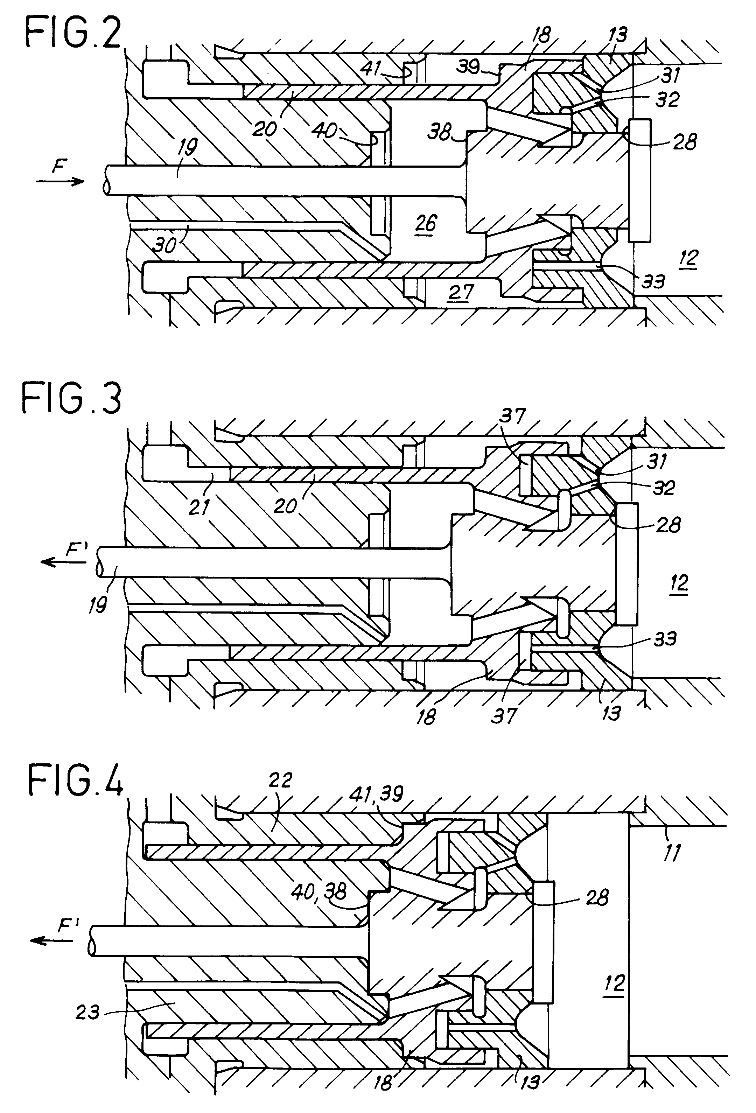

Le fonctionnement du système de propulsion intégrant l'ensemble d'injection selon l'invention est réalisé par impulsions selon le processus suivant, décrit en regard des figures 2 à 4.

Dans un état initial, l'admission du gaz de commande dans la cavité 15 par le conduit 34 chasse le piston 14 et conjointement plaque l'obturateur 18 contre la face intérieure de l'injecteur 13, obturant les canaux 31 et 32. Il peut alors être procédé au remplissage des propergols dans les cavités 26 et 27 par les conduits d'admission 29 et 30, sans entraîner aucun mélange ni passage de ces ergols liquides dans la chambre de combustion 12. La figure 2 montre la position de l'ensemble mobile constitué de l'obturateur et de l'injecteur à la fin de ce remplissage. Il peut être observé que la butée d'entraînement 28 n'est pas en contact avec la face extérieure de l'injecteur et que les cavités 26 et 27 remplies des ergols hypergoliques sont alors parfaitement isolées l'une de l'autre.

La figure 3 montre l'étape suivante correspondant à l'amorçage de la combustion. Dans cette étape, il est procédé à une traction sur l'obturateur par l'intermédiaire du retrait de la tige 19 à laquelle il est solidairement lié, ce retrait étant possible par une nouvelle admission du gaz de commande dans la cavité 15, mais au travers cette fois du conduit 35, le conduit 34 étant mis à l'air libre. Cette traction a pour effet de séparer l'obturateur de l'injecteur et ainsi de définir d'une part, des passages entre les cavités d'ergols et la chambre de combustion 12, pour le transfert, par l'intermédiaire des canaux 31 et 32, des ergols vers cette chambre et d'autre part, une cavité annulaire 37 entre l'obturateur et l'injecteur pour permettre, par l'intermédiaire du canal 33 traversant l'injecteur et débouchant dans la chambre 12, l'action des gaz de combustion sur la face intérieure de l'injecteur et la face correspondante de l'obturateur. La séparation de l'injecteur et de l'obturateur est toutefois limitée au déplacement de la butée 28 qui vient alors en contact de la face extérieure de l'injecteur. Le mélange de ces ergols hypergoliques dans la chambre provoque leur combustion, l'injection se poursuivant par un effet de piston différentiel. Du fait de l'équilibre des pressions existant de part et d'autre de l'injecteur et de la pression des ergols, les passages pour les ergols restent ouverts et l'injecteur reste en appui sur la butée d'entraînement 28.

La figure 4 montre l'ensemble mobile de l'invention après épuisement des ergols. L'obturateur 18 est dans une position arrière dans laquelle sa face antérieure est en appui sur les manchons 22 et 23 fermant le passage cylindrique 11. Il est important de noter que cette face antérieure présente en son centre et à sa périphérie des épaulements 38 et 39 qui viennent pénétrer dans une cavité 40 respectivement 41, laquelle en créant une perte de charge en fin de déplacement de l'obturateur, provoque un amortissement de son mouvement sans aucun élément mécanique, par le seul fait de la libération de l'ergol enfermé dans cette cavité non étanche lors du recul terminal de l'obturateur.

L'immobilisation de l'obturateur interrompt l'injection des ergols dans la chambre de combustion, à l'intérieur de laquelle la pression baisse alors rapidement. Le dispositif selon l'invention est de nouveau prêt pour un nouvel amorçage avec un déplacement du piston et un remplissage des cavités d'ergols comme représenté à la figure 2.

Il ressort clairement des éléments ci-dessus que la structure de l'invention est capable de réaliser des fonctionnements successifs, sans remplacement de pièces, reproductibles et dont la périodicité peut être déterminée avec précision. Elle est ainsi particulièrement adaptée à une utilisation au niveau de propulseurs de pilotage ou de générateurs de gaz fonctionnant par impulsions, mais aussi, dans le domaine des armes à feu, au niveau des canons à propulsion liquide par exemple.

Bien évidemment, l'homme de l'art pourra apporter toutes modifications à la présente invention sans sortir de son cadre.

## Revendications

1. Système d'injection d'un ensemble propulseur destiné à permettre la production de gaz de propulsion à partir d'ergols liquides, comportant un corps (10) à l'intérieur duquel est ménagé un passage cylindrique (11) fermé à une extrémité et débouchant dans une chambre de combustion (12), et dans lequel se déplace un injecteur (13), ledit injecteur étant percé de canaux d'injection (31,32) pour amener les ergols liquides à ladite chambre de combustion, et lesdits canaux pouvant être fermés sélectivement par un obturateur (18), comprenant une partie annulaire (20) faisant saillie vers l'arrière et délimitant deux cavités concentriques (26,27) caractérisé en ce que ledit obturateur est solidaire de moyens de traction (14,19) dont le déplacement alternatif assure, par un appui frontal de l'obturateur sur l'injecteur annulaire (13), l'ouverture ou la fermeture simultanée desdits canaux, le déplacement dudit injecteur vers une position de retrait étant réalisé par une butée d'entraînement (28) solidaire desdits moyens de traction.

2. Système d'injection selon la revendication 1, caractérisé en ce que lesdits moyens de traction comprennent un piston double effet (14,19) se déplacant entre une première position de poussée de l'obturateur dans laquelle lesdites cavités sont remplies d'ergols et lesdits canaux obturés, et une seconde position de retrait de l'obturateur dans laquelle lesdites cavités sont vides d'ergols.

3. Système d'injection selon la revendication 1 ou la revendication 2, caractérisé en ce que lesdits canaux d'injection sont organisés en couronne de doublets et en ce que d'autres canaux (33) traversant ledit injecteur sont disposés entre les doublets afin de permettre un équilibrage des pressions au niveau de la face interne de cet injecteur.

4. Système d'injection selon l'une quelconque des revendications 1 à 3, caractérisé en ce que ledit obturateur comporte sur sa face antérieure au moins un épaulement (38,39) qui, en fin de retrait des moyens de traction, vient pénétrer dans au moins une cavité (40,41) pratiquée dans l'extrémité fermée du passage cylindrique (11), réalisant ainsi un amortissement du mouvement de l'obturateur du fait de la perte de charge créée dans cette cavité.

5. Système d'injection selon la revendication 4, caractérisé en ce que l'extrémité fermée dudit passage cylindrique est formée par deux manchons concentriques (22,23) entre lesquels coulisse la partie annulaire arrière (20) de l'obturateur, la sur-face extérieure du premier manchon (22) coulissant dans le passage (11) et la surface intérieure du second manchon (23) coulissant sur l'axe des moyens de traction (19).

6. Système d'injection selon la revendication 5, caractérisé en ce que la cavité annulaire (21) formée entre les deux manchons et dans laquelle coulisse la partie arrière de l'obturateur (20), communique à l'air libre.

## Patentansprüche

1. Einspritzungssystem eines Triebwerkes, das dazu dient, die Erzeugung von Antriebsgas aus flüssigen Treibstoffen zu ermöglichen, und einen Körper (10) umfasst, in dem ein zylindrischer Durchlaß (11) angeordnet ist, der an einem Ende geschlossen ist und in eine Verbrennungskammer (12) mündet, und in dem sich eine Einspritzdüse (13) bewegt, wobei die Einspritzdüse von Einspritzkanälen (31, 32) durchbrochen ist, um die flüssigen Treibstoffe zur Verbrennungskammer zu leiten, und wobei die Kanäle wahlweise durch einen Verschluß (18) verschlossen werden können, der einen ringförmigen Abschnitt (20) aufweist, der nach hinten vorspringt und zwei konzentrische Hohlräume (26, 27) begrenzt,
dadurch gekennzeichnet, daß
der Verschluß einstückig mit Zugeinrichtungen (14, 19) ausgebildet ist, deren abwechselnde Verschiebung, durch eine stirnseitige Anlage des Verschlusses gegen die ringförmige Einspritzdüse (13), die gleichzeitige Öffnung oder Schließung der Kanäle gewährleistet, wobei die Verschiebung der Einspritzdüse in eine Rückzugsposition durch einen Mitnehmeranschlag (28) ausgeführt wird, der mit den Zugeinrichtungen einstückig ausgebildet ist.

2. Einspritzungssystem nach Anspruch 1, dadurch gekennzeichnet, daß die Zugvorrichtungen einen doppeltwirkenden Kolben (14, 19) umfassen, der sich zwischen einer ersten Vorschubstellung des Verschlusses, in der die Hohlräume mit Treibstoff gefüllt und die Kanäle verschlossen sind, und einer zweiten Rückzugsstellung des Verschlusses bewegt, in der die Hohlräume von Treibstoff geleert sind.

3. Einspritzungssystem nach Anspruch 1 oder 2, dadurch gekennzeichnet, daß die Einspritzkanäle in Dubletten-Kränzen angeordnet sind, und daß andere Kanäle (33), die den Verschluß durchsetzen, zwischen den zwei Dublettenkränzen vorgesehen sind, um einen Druckausgleich auf der Höhe der Innenseite der Einspritzdüse zu ermöglichen.

4. Einspritzungssystem nach einem der Ansprüche 1 bis 3, dadurch gekennzeichnet, daß der Verschluß an seiner Vorderseite wenigstens einen Vorsprung (38, 39) aufweist, der, am Ende des Rückzugs der Zugvorrichtungen, in wenigstens einen Hohlraum (40, 41) eindringt, der im geschlossenen Ende des zylindrischen Durchlasses (11) ausgebildet ist, wodurch eine Dämpfung der Bewegung des Veschlusses infolge des in diesem Hohlraum erzeugten Druckverlustes erzeugt wird.

5. Einspritzungssystem nach Anspruch 4, dadurch gekennzeichnet, daß das geschlossene Ende des zylindrischen Durchlasses aus zwei konzentrischen Muffen (22, 23) gebildet wird, zwischen denen der hintere ringförmige Abschnitt des Veschlusses (20) gleitet, wobei die äußere Oberfläche der ersten Muffe (22) in dem Durchlaß (11) und die innere Oberfläche der zweiten Hülse (23) auf der Achse der Zugvorrichtungen (19) gleitet.

6. Einspritzungssystem nach Anspruch 5, dadurch gekennzeichnet, daß der ringförmige Hohlraum (21), der zwischen den beiden Muffen gebildet ist und in dem der hintere Abschnitt des Veschlusses (20) gleitet, mit der Umgebung in Verbindung steht.

## Claims

1. Injection system of a propulsion unit intended to allow the production of propulsion gas from liquid ergols, including a body (10) inside which there is formed a cylindrical passage (11) which is closed at one end and emerges into a combustion chamber (12), and in which there moves an injector (13), the said injector being pierced with injection ducts (31,32) for conveying the liquid ergols to the said combustion chamber, it also being possible for the said ducts to be closed selectively by a stopper (18) comprising an annular part (20) which projects backwards and delimits two concentric cavities (26,27), characterized in that the said stopper is integral with traction means (14,19) the reciprocating displacement of which, by means of the stopper resting frontally on the annular injector (13), ensures the simultaneous opening or closure of the said ducts, the displacement of the said injector into a recoiled position being achieved by a driving stop (28) integral with the said traction means.

2. Injection system according to Claim 1, characterized in that the said traction means comprise a double-acting piston (14,19) which is displaced between a first position of pushing the stopper in which position the said cavities are filled with ergols and the said ducts are closed off, and a second position of recoiling the stopper, in which the said cavities are empty of ergols.

3. Injection system according to Claim 1 or Claim 2, characterized in that the said injection ducts are organized in a ring of doublets and in that other ducts (33) passing through the said injector are arranged between the doublets so as to allow the pressures at the internal face of this injector to be balanced.

4. Injection system according to any one of Claims 1 to 3, characterized in that the said stopper includes on its anterior face at least one shoulder (38,39) which, when the traction means are finished recoiling, enters at least one cavity (40,41) made in the closed end of the cylindrical passage (11), thus damping the movement of the stopper owing to the head loss created in this cavity.

5. Injection system according to Claim 4, characterized in that the closed end of the said cylindrical passage is formed by two concentric sleeve tubes (22,23) between which the rear annular part (20) of the stopper slides, the outer surface of the first sleeve tube (22) sliding in the passage (11) and the inner surface of the second sleeve tube (23) sliding along the stem of the traction means (19).

6. Injection system according to Claim 5, characterized in that the annular cavity (21) formed between the two sleeve tubes and in which the rear part of the stopper (20) slides, is vented to the open air.
